# EUROPEAN PATENT APPLICATION

(11) **EP 1 413 682 A1**
(43) Date of publication of application: **28.04.2004**
(21) Application number: 02758489.5
(22) Date of filing: 26.07.2002
(51) Int. Cl.: E02D 29/12, H02G 9/10

(54) **MODULAR ENCLOSURE FOR BURIED PIPELINES**

(30) Priority: 02.08.2001 ES 200101822
(71) Applicant: Garcia Ballesteros, Angel, 29016 Malaga (ES)
(72) Inventor: CORZ RODRIGUEZ, Alfonso, 29016 Algeciras, Cadiz (ES)
(74) Representative: Garcia-Cabrerizo y del Santo, Pedro Maria
(86) International application number: PCT/ES2002/000380
(87) International publication number: WO 2003/012213

(57) **Abstract**

Modular chest for underground mains made up of various identical panels (2) coupled amongst each other with overlapping.

Each panel (2) has on one of its borders, a plurality of hooks (4) capable of introducing themselves into the corresponding lodges (6) placed on the front side of another panel (2) previously assembled. Once the panels are flushed at the same height, the combination cannot be decoupled by simple traction. Figures 2 and 4.

## Description

This invention refers to a modular chest for underground mains of electric or telephone cables.

At present, the majority of the mentioned chests are made of brick or with prefabricated concrete, which imply high costs, either of assembly labour, or of transportation.

There are processes of construction of chests which use lightweight panels like plank mould or lost mould, as described in the document ES 2 019 780 of the same applicant. The process consists of using an array of panels of PVC or polyester reinforced with fibre glass, joined together by their sides to construct a sort of box capable of holding back the pressure of the compacted soils or low resistance concrete that is used to fill in the surrounding land.

A solution, although only partly solving the problems of costs, brings up certain difficulties in production because at present, any type of chest is clearly defined by its size, thus forcing the manufacture of panels of different sizes and a different mould for each size of chest.

Therefore, for example, if we must supply chests of 40 x 40 x 55cm, 50 x 50 x 55 cm, and 60 x 60 x 55 cm, we will need three moulds and to organize the production in a way that we will always have in the warehouse stocks of all the sizes of chests.

To solve this problem, using a common mould has been tried with desmountables or supplements on the top part (cavity) and also on the bottom part (punch), which must be assembled or dismantled to make each one of the chests of different size. It is necessary to bear in mind that the moulds, when in production, are at a working temperature of 140°C, therefore to make any type of change to the desmountables, the mould must be cooled, and that means at least 24 hours. Once the dismantling or assembling of the desmountables has been done, to make a new type of chest, the temperature of the mould must be raised up to its working value of 140°C.

It is an objective of the present invention as it has a modular system, which permits the construction of chests of different sizes with only one panel size, which in consequence, will be done with a unique mould.

The modular chest, object of the present invention, parts with a new concept of overlap coupling of the panels instead of using an abutment. This arrangement permits using a unique size of panel, made with only one mould, to obtain the assembly of chests of different sizes. The modular chest is constructed with four identical panels joined by means of coupling which permits an overlap arrangement in various different positions. Preferably, these ways of coupling consist in a plurality of hooks arranged on one of the vertical borders of the panel, capable of being introduced into one or another of various vertical rows of lodges, available on the opposite side of the front panel. Depending if the hooks are introduced into one vertical row of lodges or another, chests of different sizes are obtained.

The advantages of such a solution are the following:
- Elimination of the dead time of three days to change the mould.
- Reduction in the cost of the mould, that now is unique and without desmountables.
- Elimination of the thermal energy necessary for heating the mould each time it is necessary to change the mould.
- Reduction of stocks, and consequently of the trading capital, as it is only necessary to have a unique type of panel available.
- Great speed in reply to the orders of customers, as the risk of lack in stocks in the warehouse is reduced.

To compliment the preceding description, and with the aim of helping with a better comprehension of the invention characteristics, a detailed description is going to be effected of a preferred embodiment, based on a set of drawings that accompany this specification and where, only for orientation and not restrictive character, the following has been represented:
- Figure 1: the unique panel, which is used to make the modular chest, object of the invention.
- Figure 2: shows the means of coupling, made up by a combination of hook and lodge.
- Figure 3: shows a modular chest being assembled.
- Figure 4: shows the chest in figure 3, once assembling has finished.

In these figures, the numbered references correspond to the following parts and elements.
1. Chest
2. Panel
3. Reinforcing ribs
4. Hooks
5. Holes for Fixing
6. Lodge
7. Through holes
8. Sharp point of hook (4)

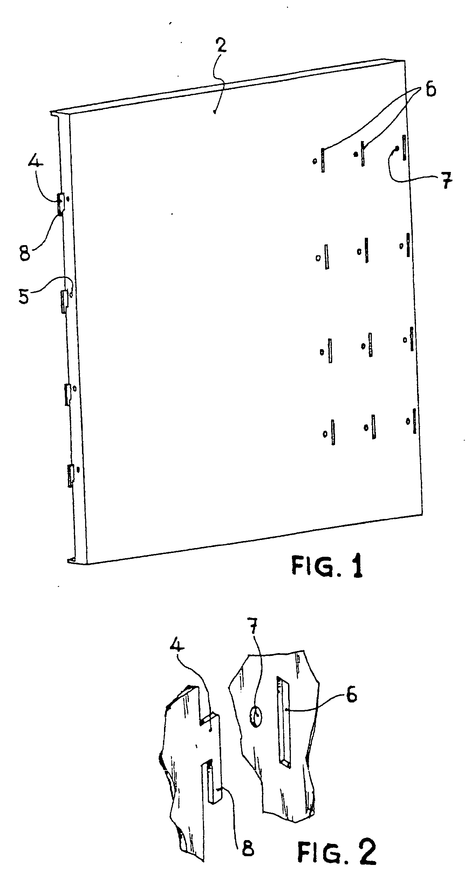

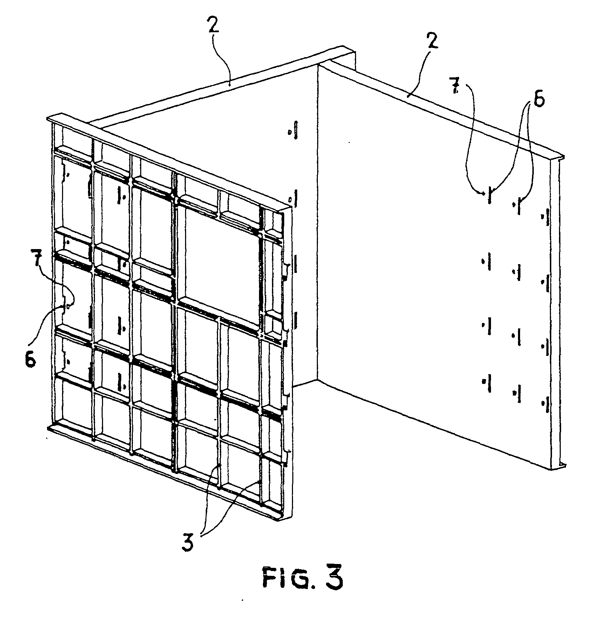

As can be seen in figures 1 and 3, the chest (1) is made up of four identical panels (2), which have reinforcing ribs (3) on the outside, whereas the side which is due to be placed towards the inside of the chest (1), is smooth. Each panel (2) has on one of its vertical borders a plurality of hooks (4) and holes for fixing (5), whereas on the front side, and on the opposite side of the prepared border, there are various rows of lodges (6) and through holes (7).

It would be an advantage to put the hooks (4) flat, as has been shown, in which case the lodges (6) are in shape of a groove, with an altitude higher than the vertical size of the hooks (4).

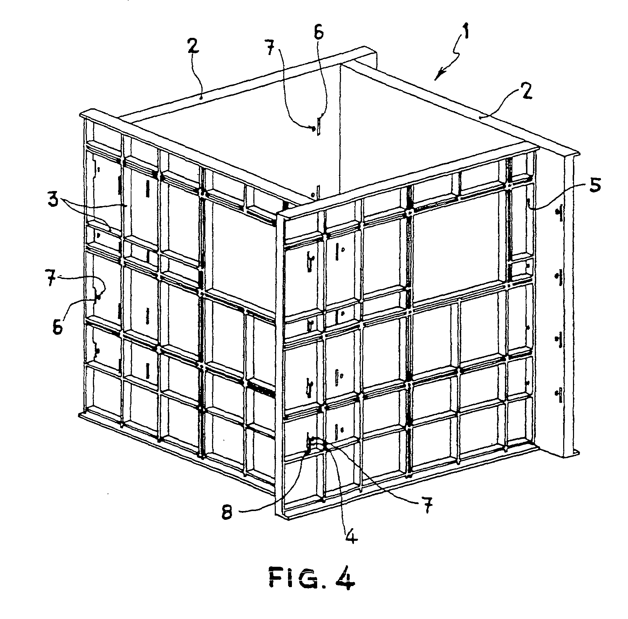

The construction of the chest (1) is immediate by overlap coupling of four panels (2), for which the hooks (4) of the second panel will be inserted into the lodge (6) of the first panel, and it is necessary to vertically move a panel with respect to the other. Once the hooks (4) have been inserted into their lodges (6), the higher panel will be dropped until both panels are flushed; at this point, the sharp points (8) of the hooks (4) do not touch the grooves that make up the lodges (6), and therefore both panels cannot be decoupled by simple traction. In figure 4, the finished aspect of the modular chest can be seen, in which the coupling between panels has been done using the row between the lodges (6). If the inside row would have been used, a smaller chest would have been obtained, and if the outside row would have been used, a larger chest would have been obtained.

For a skilled in the art, a series of modifications or variations are obvious in the adaptation of the chest into its intended purpose and still remaining within the essentialness of the invention. Equally, it has been predicted to make the panels with lightweight plastic, but it is feasible to manufacture them in other materials such as sheet metal or cast iron or even prefabricated concrete. At the same time, a great number of reinforcing ribs (3) have been shown in the figures, as these correspond to a preferred embodiment made in polyester reinforced with fibreglass, but it is obvious that the amount of reinforcing ribs can be reduced and even eliminated, adjusting the materials and the design.

## Claims

1. Modular chest for underground mains, **characterized in that** comprises various identical panels (2), equipped with means of coupling in such a way that a vertical border of each panel (2) can remain unmoveable against the front side of the other panel (2) at different distances from the border of the mentioned front part.

2. Modular chest for underground mains, according to claim 1, **characterized in that** the coupling means comprise a plurality of hooks (4) placed on a vertical border of the panel (2) and a plurality of lodges (6) placed in various vertical rows on the front side of the panel (2), so that the hooks (4) of a panel can be introduced into the lodges (6) of another panel, and once they are flushed vertically, they cannot be decoupled by simple traction.

3. Modular chest for underground mains, according to claim 2 **characterized in that** on the border of the panel (2) which has the hooks (4), there are a plurality of holes for fixing (5), and coinciding with these when two panels are coupled, on the front side of the panel (2) there are a plurality of through holes (7).
